Europäisches Patentamt

European Patent Office

Office européen des brevets

(19)

(11) Numéro de publication : **0 040 612**
**B1**

(12) **FASCICULE DE BREVET EUROPÉEN**

(45) Date de publication du fascicule du brevet :
13.03.85

(51) Int. Cl.⁴ : **B 60 F 1/04**

(21) Numéro de dépôt : **80902170.2**

(22) Date de dépôt : **24.11.80**

(86) Numéro de dépôt international :
**PCT/CH 80/00144**

(87) Numéro de publication internationale :
**WO/8101537 (11.06.81 Gazette 81/14)**

(54) **VEHICULE TRANSFORMABLE POUR LE TRANSPORT FERROVIAIRE ET ROUTIER DE MARCHANDISES.**

(30) Priorité : 26.11.79 CH 10491/79

(43) Date de publication de la demande :
02.12.81 Bulletin 81/48

(45) Mention de la délivrance du brevet :
13.03.85 Bulletin 85/11

(84) Etats contractants désignés :
AT DE FR GB NL SE

(56) Documents cités :
CH-A- 374 018
DE-C- 961 714
FR-A- 766 525
FR-A- 1 368 963
FR-A- 1 598 994
FR-E- 87 023
US-A- 2 564 311
US-A- 2 709 969
US-A- 2 981 209
US-A- 3 370 551

(73) Titulaire : ADAMS, Albert
13, rue Kléberg
CH-1201 Genève (CH)

(72) Inventeur : ADAMS, Albert
13, rue Kléberg
CH-1201 Genève (CH)

(74) Mandataire : Ardin, Pierre et al
PIERRE ARDIN & CIE 22, rue du Mont-Blanc
CH-1211 Genève 1 (CH)

Jouve, 18, rue St-Denis, 75001 Paris, France

## Description

Véhicule transformable pour le transport ferroviaire et routier comprenant un châssis formé de deux parties assemblées l'une à l'autre sensiblement au milieu de ce dernier, des moyens d'accouplement permettant de réunir rigidement ces deux parties et respectivement de les séparer l'une de l'autre, des pièces de butée étant fixées aux extrémités en regard des deux parties dont les surfaces en regard viennent en contact mutuel sous l'effet du poids du véhicule, chacune des parties comportant des moyens de fixation de roues routières et un dispositif d'attelage et de support susceptible de coopérer avec un dispositif correspondant d'un tracteur routier.

Un véhicule de ce genre est décrit dans le brevet américain n° 2 564 311. Un wagon ferroviaire, séparable en deux parties, comporte deux essieux ferroviaires simples vers ses extrémités extérieures et, vers le centre, deux paires de roues entières susceptibles d'être rabattues ou remontées pour le transport routier ou respectivement ferroviaire. Chaque extrémité du wagon comporte un timon escamotable permettant un attelage à un tracteur. Les moyens d'accouplement permettant de réunir les deux parties sont constitués par une tige filetée portant deux boulons destinés à coopérer avec des crochets fixés au:· extrémités en regard des deux parties. Ces dernières sont serrées l'une contre l'autre par rotation de la tige filetée.

Dans ce véhicule, les roues ferroviaires sont fixées à demeure sur le véhicule, ce dernier doit donc être considérablement levé à l'avant pour que les roues ferroviaires conservent une garde au sol suffisante lors du transport sur route. Un autre inconvénient réside dans le fait que les roues routières sont logées en permanence sous le wagon ferroviaire, ce qui nécessite des transformations onéreuses du châssis du wagon ferroviaire. Le véhicule décrit présente un rapport tare/poids de marchandise transportée élevé, puisque les deux essieux routiers et les deux timons d'accouplement sont constamment transportés sur rail. L'utilisation de bogies au lieu d'essieux simples est impossible, car un bogie ferroviaire complet ne pourrait rester fixé à demeure lors du transport routier vu son poids et encombrement. En outre, l'accouplement des deux parties du véhicule au moyen de la tige filetée et des deux boulons est compliqué et long et aucun dispositif de commande pour la conduite générale d'air comprimé n'est prévu sur ce véhicule.

On connaît également par le brevet français n° 766 525 une remorque pour usage routier comportant à une extrémité un dispositif d'attelage soit à un tracteur routier soit à un bogie et à son autre extrémité un dispositif permettant la substitution d'un train d'essieux routier à un bogie et vice-versa. Le châssis d'un tel véhicule routier transformable ne possède pas une longueur et une solidité suffisante pour pouvoir être intégré dans un train et pour être conforme aux normes de sécurité ferroviaires. Un véhicule de ce type constitue soit un wagon ferroviaire beaucoup trop court soit une remorque routière trop longue.

La présente invention a pour but de remédier aux inconvénients des véhicules connus et de réaliser un véhicule apte au transport mixte, conforme aux règlements routiers et ferroviaires et dont la transformation pour l'usage routier ou ferroviaire est rapide et sûre.

Le véhicule selon l'invention est caractérisé, à cet effet, en ce que les dispositifs d'attelage sont fixés sensiblement aux extrémités des deux parties destinées à être réunies l'une à l'autre, les moyens de fixation des roues routières étant constitués par des dispositifs, connus en soi, permettant la substitution d'un train d'essieux routier à un bogie ferroviaire et vice-versa, ces dispositifs étant fixés à l'autre extrémité de chacune des deux parties, ces dernières comprenant des demi-longerons latéraux présentant à leurs extrémités en regard l'une de l'autre des pattes percées d'un alésage, lesdites pattes étant destinées à être accouplées par l'introduction d'une cheville, lesdites pièces de butée étant maintenues en contact, des deux côtés du véhicule, par un crochet pivotant, fixé sur l'une des pièces de butée et coopérant avec une tige tournante coopérant avec une vanne prévue sur la conduite d'air comprimé d'un frein, le bras radial se plaçant en position fermée en regard de ladite cheville pour bloquer cette dernière dans sa position d'engagement dans ledit alésage.

Le dessin annexé représente, schématiquement et à titre d'exemple, une forme d'exécution et une variante d'un véhicule faisant l'objet de l'invention.

La figure 1 est une vue en élévation de la forme d'exécution du véhicule.

La figure 2 montre ce véhicule lorsqu'une de ses extrémités est soulevée par un vérin.

La figure 3 est une vue en élévation d'une partie du véhicule transformée en remorque de camion semi-remorque.

La figure 4 représente, vu de dessous, un véhicule en cours de transformation.

La figure 5 représente, en plan et à plus grande échelle, le dispositif d'accouplement des deux parties du véhicule, en position dégagée.

La figure 6 est une vue latérale de la figure 5.

La figure 7 correspond à la figure 6, le dispositif d'accouplement en position engagée.

La figure 8 montre un détail du dispositif d'accouplement.

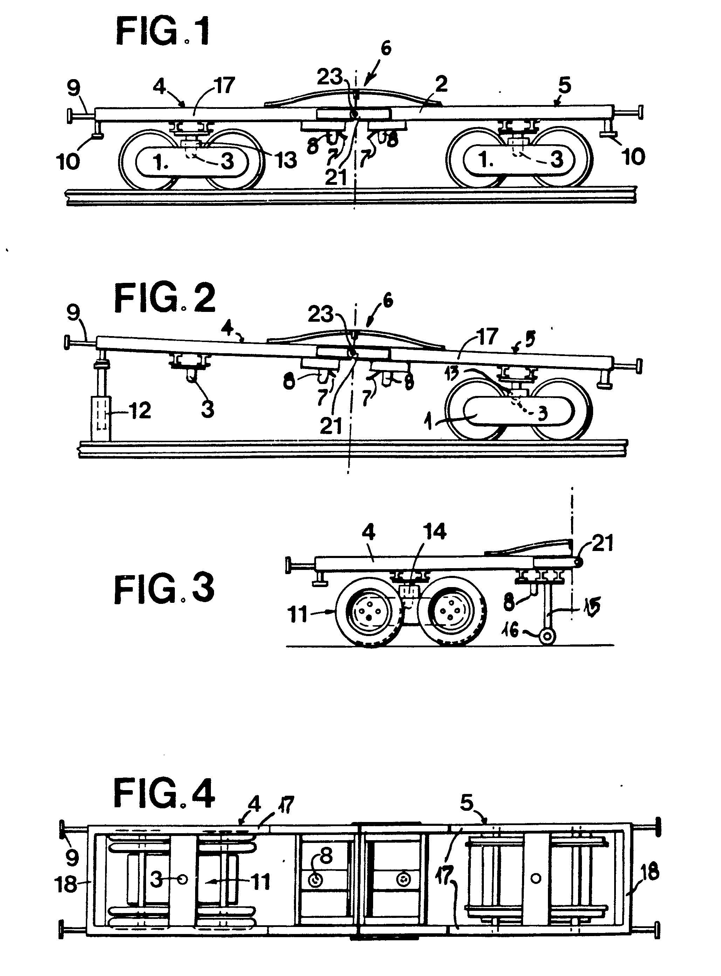

Le véhicule illustré à la fig. 1 est un wagon à bogies 1 montés pivotants aux extrémités du châssis 2 sur des pivots 3. Le châssis 2 est formé par deux demi-châssis 4 et 5 de longueur sensiblement égale et assemblés l'un à l'autre par des moyens d'accouplement 6 qui seront décrits plus loin en détail.

Les extrémités en regard des demi-châssis 4, 5 sont équipées de moyens d'attelage 7, susceptibles de coopérer avec un dispositif d'attelage correspondant d'un camion tracteur de semi-remorque, et d'un second pivot 8 semblable aux pivots 3. Le wagon est muni de tampons 9 et comprend à ses deux extrémités des surfaces d'appui 10 pour des vérins.

Le wagon décrit est prévu pour être transformé en deux remorques de camion à semi-remorque et les fig. 2 à 4 illustrent différents stades de cette transformation.

La première opération consiste à substituer les deux bogies 1 par deux trains d'essieux routiers 11.

La substitution d'un bogie est courante, notamment pour remplacer un bogie défectueux ou pour échanger un bogie pour voie étroite contre un bogie pour voie large, comme cela se pratique par exemple à la frontière franco-espagnole.

La substitution d'un bogie est réalisée, comme le montre la fig. 2, en soulevant un côté du wagon par des vérins 12, de façon à dégager le pivot 3 d'articulation de la portée 13 du bogie 1 dans laquelle il est placé. On remplace alors le bogie 1 par un train d'essieux routiers 11, puis on laisse redescendre le châssis 2 pour introduire le pivot 3 dans la partie 14 du train d'essieux 11.

Lorsque les deux bogies sont remplacés, on met en place, sous chaque demi-châssis et à proximité des moyens d'accouplement 6, des béquilles 15 pourvues de roulettes 16, qui peuvent d'ailleurs faire partie de l'équipement du wagon.

Ces béquilles 15 étant en place, on peut séparer les deux demi-châssis 4 et 5 l'un de l'autre en libérant les moyens d'accouplement 6. Chaque demi-châssis 4, 5 équipé du train d'essieux routiers 11 constitue ainsi une remorque, illustrée à la fig. 3, susceptible d'être attelée à un véhicule tracteur. Bien entendu, le train d'essieux routiers 11 coopère avec des moyens de verrouillage l'empêchant de tourner autour du pivot 3.

La transformation de deux remorques en wagon ferroviaire se fait en procédant de la façon inverse, en présentant les deux remorques face à face, en les liant par les moyens d'accouplement 6 et en substituant les trains d'essieux 11 par des bogies 1.

La traction sur route des remorques est de préférence réalisée par un tracteur de semi-remorque, mais elle peut également être assurée par un véhicule tracteur quelconque, lorsque le demi-châssis 4 est équipé de deux trains d'essieux 11, le second train d'essieux 11 étant monté sur le pivot 8.

Le véhicule décrit ci-dessus a l'avantage de présenter une tare relativement faible par rapport au poids de la marchandise transportée, que ce soit sur rail ou sur route, et les remorques créées par les demi-châssis sont de dimension extérieure courante, ne nécessitant pas de convois spéciaux.

Comme illustré à la fig. 4, le châssis 2 du wagon est formé par des longerons 17 reliés par des traverses 18. Les longerons 17 sont constitués par des fers profilés en U.

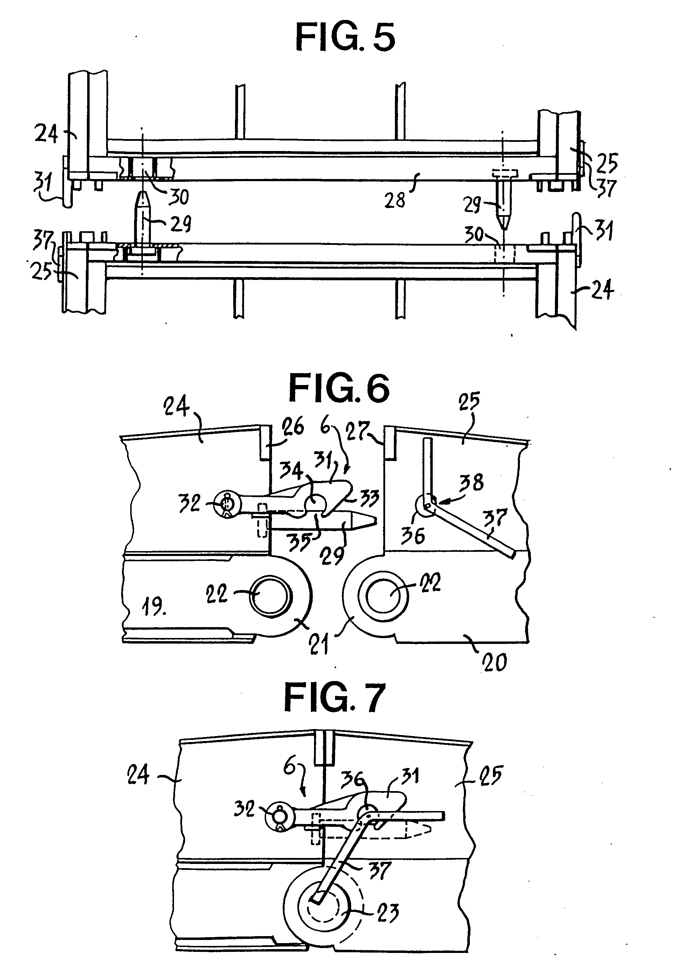

Les moyens d'accouplement des deux parties du wagon sont représentés en détail aux fig. 5 à 8. Chaque demi-longeron 17 est renforcé vers le milieu du wagon par une pièce 19 resp. 20 présentant des pattes 21 percées d'un alésage 22. Ces pattes 21 peuvent être accouplées axialement par une introduction d'une cheville 23 dans les alésages 22 qui sont ainsi retenus en position alignée entre eux.

Pour bloquer l'articulation, qui est obtenue par une introduction de la cheville 23 dans les alésages 22, le dispositif d'accouplement présente encore de chaque côté deux pièces de butée 24 resp. 25 dont les surfaces 26 et 27 viennent en contact mutuel sous l'effet du poids du wagon.

Comme le montre la fig. 5 une pièce de butée 24 est reliée par une entretoise 28 à l'autre butée 25 du même demi-wagon. Chacune de ces entretoises présente un doigt 29 et un trou 30 disposé de façon à s'accoupler avec le trou 30 et le doigt 29 de l'entretoise opposée.

Après l'introduction des chevilles 23 dans les alésages 22, les pièces 24 et 25 sont fermement maintenues en contact à l'aide d'un crochet articulé 31 pivotant en 32 sur la pièce de butée 24. Ce crochet 31 présente un bec oblique 33 et un évidement 34 de forme générale circulaire, cet évidement s'ouvrant en 35 sur une distance inférieure au diamètre de cet évidement. Le crochet 31 coopère avec une tige tournante 36 munie d'une poignée à deux bras 37 et présentant un plat 38 de façon que, dans la position illustrée à la fig. 6, il soit possible d'engager le crochet 31 sur cette tige 36. Après la mise en place du crochet 31, la poignée 37 est actionnée pour amener la tige 36 dans la position illustrée à la fig. 7. De cette façon, le crochet 31 ne peut plus être dégagé de la tige 36 tant que cette tige n'a pas été replacée dans la position de la fig. 6. Il y a lieu de remarquer que dans la position selon la fig. 7, un bras de la poignée 37 vient se placer en regard de la tête de la cheville 23 et bloque ainsi cette dernière dans sa position d'engagement dans les alésages 22.

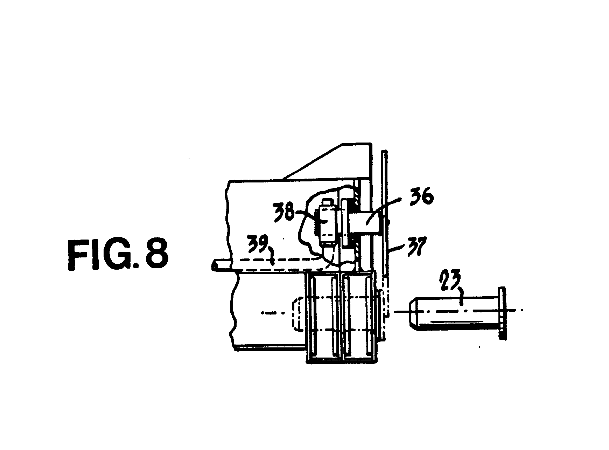

Comme le montre la fig. 8, la manœuvre de la poignée 37 permet d'actionner par l'intermédiaire de la tige 36 une vanne 38 prévue sur la conduite d'air comprimé 39 du frein automatique classique des chemins de fer. Ainsi, lorsqu'on manœuvre la poignée 37 dans le but de désaccoupler les parties 4 et 5 du wagon, on ferme tout d'abord la conduite générale d'air comprimé, même si les raccords d'air comprimé entre les wagons n'ont pas été désaccouplés.

## Revendication

Véhicule transformable pour le transport ferroviaire et routier comprenant un châssis (2) formé de deux parties (4, 5) assemblées l'une à l'autre sensiblement au milieu de ce dernier, des moyens d'accouplement (6) permettant de réunir rigidement ces deux parties et respectivement de les séparer l'une de l'autre, des pièces de butée (24, 25) étant fixées aux extrémités en regard des deux parties (4, 5) dont les surfaces en regard viennent en contact mutuel sous l'effet du poids du véhicule, chacune des parties (4, 5) comportant des moyens de fixation de roues routières et un dispositif (7) d'attelage et de support susceptible de coopérer avec un dispositif correspondant d'un tracteur routier, caractérisé en ce que les dispositifs d'attelage (7) sont fixés sensiblement aux extrémités des deux parties destinées à être réunies l'une à l'autre, les moyens de fixation des roues routières étant constitués par des dispositifs, connus en soi, permettant la substitution d'un train d'essieux routier à un bogie ferroviaire et vice-versa, ces dispositifs étant fixés à l'autre extrémité de chacune des deux parties, ces dernières comprenant des demi-longerons latéraux (17) présentant à leurs extrémités en regard l'une de l'autre des pattes (21) percées d'un alésage (22), lesdites pattes étant destinées à être accouplées par l'introduction d'une cheville (23), lesdites pièces de butée (24, 25) étant maintenues en contact, des deux côtés du véhicule, par un crochet pivotant (31), fixé sur l'une des pièces de butée et coopérant avec une tige tournante (36) munie d'au moins un bras radial (37) montée sur l'autre butée, ladite tige tournante (36) coopérant avec une vanne (38) prévue sur la conduite d'air comprimé (39) d'un frein, le bras radial (37) se plaçant en position fermée en regard de ladite cheville (23) pour bloquer cette dernière dans sa position d'engagement dans ledit alésage.

## Claim

Transformable vehicle for railway and road transport comprising a chassis (2) constituted by two parts (4, 5) assembled together approximately in the middle of said chassis, connecting means (6) permitting the rigid connecting of said two parts and respectively the separation of said parts each from the other, abutment pieces (24, 25) being affixed to the extremities of the two parts (4, 5) facing each other, whose opposing surfaces come into mutual contact under the effect of the weight of the vehicle, each of the parts (4, 5) comprising attaching means for road wheels and a coupling and support device (7) engageable with a corresponding device of a highway tractor, characterized in that the coupling devices (7) are fastened approximately adjacent to the extremities of the two parts intended to be joined together, the attaching means of the road wheels being constituted by devices, known in itself, permitting the substitution of a wheel set for highway use by a railroad truck and vice versa, these devices being affixed on the other extremity of each of the two parts, the latter comprising lateral half-stringers (17) provided at their extremities facing each other with tabs (21) having a boring (22), said tabs being intended to be coupled by the introduction of a peg (23), said abutment pieces (24, 25) being held in mutual contact on each side of the vehicle by a pivoting hook (31) mounted on one of the abutment pieces and co-operating with a rotatable rod (36) provided with at least one radial arm (37) and mounted on the other abutment piece, said rotatable rod (36) co-operating with a valve (38) provided on the compressed air duct (39) of a brake, in closed position the radial arm (37) being placed so as to face said peg (23) in order to block the latter in the introduced position of said boring.

## Anspruch

Umbaubares Fahrzeug für den Bahn- und Wegetransport mit einem Rahmen (2), bestehend aus zwei im wesentlichen in der Mitte desselben aneinandergefügten Teilen (4, 5), mit Ankopplungsmitteln (6), die das starre Verbinden dieser beiden Teile und entsprechend ihr Loslösen voneinander ermöglichen, mit Anschlagstücken (24, 25), welche an den einander gegenüberliegenden Enden der beiden Teile (4, 5) befestigt sind, deren einander gegenüberliegende Flächen unter der Einwirkung des Gewichtes des Fahrzeuges in gegenseitige Berührung gelangen, wobei jeder der Teile (4, 5) Befestigungsmittel für Räder für den Wegebetrieb und eine Kupplungs- und Trägervorrichtung (7) umfaßt, die mit einer entsprechenden Vorrichtung einer Zugmaschine für den Wegebetrieb zusammenwirken kann, dadurch gekennzeichnet, daß die Kupplungsvorrichtungen (7) im wesentlichen an den Enden der beiden Teile befestigt sind, die dazu bestimmt sind, miteinander verbunden zu werden, wobei die Befestigungsmittel der Räder für den Wegebetrieb von an sich bekannten Vorrichtungen gebildet werden, die einen Ersatz eines Achszuges für den Wegebetrieb durch ein Bahndrehgestell und umgekehrt ermöglichen, wobei diese Vorrichtungen am anderen Ende jedes der beiden Teile befestigt sind und letztere seitliche Halbrahmen (17) aufweisen, die an ihren einander gegenüberliegenden Enden Befestigungsklauen besitzen, welche von einer Bohrung (22) durchbrochen sind, wobei die genannten Befestigungsklauen dazu bestimmt sind, durch das Einführen eines Zapfens (23) aneinandergefügt zu werden und die genannten Anschlagstücke (24, 25) auf beiden Seiten des Fahrzeuges von einem Schwenkhaken (31) in Kontakt gehalten werden, der auf einem der Anschlagstücke befestigt ist und mit einem Drehstift (36) zusammenwirkt, der mit mindestens einem radialen Arm (37) ausgestattet ist, welcher auf dem anderen Anschlagstück angebracht ist, wobei der genannte Drehstift (36) mit einem Ventil (38) zusammenwirkt, das auf der Druckluftleitung (39) einer Bremse vorgesehen ist und der radiale Arm (37) sich in Schließstellung gegenüber dem genannten Zapfen (23) befindet, um letzteren in seiner Eingriffsposition in genannter Bohrung festzusetzen.

**FIG.1**

**FIG.2**

**FIG.3**

**FIG.4**

# FIG. 5

# FIG. 6

# FIG. 7

**FIG. 8**

39

38

36

37

23